# EUROPÄISCHE PATENTSCHRIFT

(11) **EP 1 675 922 B1**
(45) Veröffentlichungstag und Bekanntmachung des Hinweises auf die Patenterteilung: **17.06.2015**
(21) Anmeldenummer: 05737703.8
(22) Anmeldetag: 21.03.2005
(51) Int. Cl.: C09D 183/04, C08K 3/08, C09D 5/10, C08K 5/32

(54) **MIKROSCHICHT MIT SILOXANEN**
MICROCOATING COMPRISING SILOXANES
MICROCOUCHE COMPRENANT DES SILOXANES

(30) Priorität: 19.03.2004 DE 102004014032
(43) Veröffentlichungstag der Anmeldung: 05.07.2006
(73) Patentinhaber: EWALD DÖRKEN AG, 58313 Herdecke (DE)
(72) Erfinder: KRUSE, Thomas, 44229 Dortmund (DE); REUSMANN, Gerhard Dr., 45259 Essen (DE); WERNER, Bettina Dr., 58313 Herdecke (DE)
(74) Vertreter: Kalkoff & Partner
(86) Internationale Anmeldenummer: PCT/EP2005/002984
(87) Internationale Veröffentlichungsnummer: WO 2005/090502

(56) Entgegenhaltungen:
- EP-A- 1 233 043
- WO-A-94/09075
- US-A- 4 209 555
- US-A- 4 218 354
- US-A- 5 477 918
- US-B1- 6 287 372

## Beschreibung

Die Erfindung betrifft ein Bindemittel und ein Beschichtungsmittel, insbesondere für Metall-Oberflächen.

Bindemittel sind wesentlicher Bestandteil von Beschichtungsmitteln. Sie bewirken den Zusammenhalt der verschiedenen Komponenten eines Beschichtungsmittels und tragen zur Schichtbildung bei. Die Herstellung von Beschichtungsmitteln erfordert den Einsatz von Additiven in Verbindung mit Bindemitteln. Der Begriffe "Additive" wird im Zusammenhang dieser Erfindung für sämtliche Zusätze zu einem Bindemittel verwendet, die sich auf die Eigenschaften eines Beschichtungsmittels auswirken, unabhängig von der Menge, in der die Additive zugesetzt werden.

Beschichtungsmittel, die ein Bindemittel und als Additiv ein partikuläres Metall aufweisen, sind bekannt. Diese Mittel werden auch als Base-coat bezeichnet, sie schaffen Untergründe, die dann mit Lacken, so genannten Top-coats überzogen werden können. Im Folgenden werden wesentliche Schriften genannt, die zum Stand der Technik für solche Base-coats zählen:
US 6,287,372 **(Themec Company Incorporated, 2000)**
   Hier wird eine Zink-Beschichtung für den Korrosionsschutz beschrieben. Als Bindemittel wird ein Siloxan-Polymerharz beschrieben, genauer: eine vorhydrolysierte, anorganische Alkyl-Silikat-Verbindung wie Silbond XHT 33. In der Beschreibung ist vermerkt, dass Alkyl-Silikat bevorzugt wird, dass man aber davon ausgeht, dass andere Siloxan-Polymerharze genauso gut einsetzbar sind. Die genannten Verbindungen sind lösemittelhaltig mit der Folge, dass beim Verarbeiten und insbesondere beim Trocknen der Beschichtung flüchtige Verbindungen freigesetzt werden.
US 5,477,918 **(United Technologies Corporation)**
   Eine Rezeptur für ein wässeriges Korrosionsschutzmittel wird beschrieben. Das in der Rezeptur eingesetzte Bindemittel ist eine Silikonharz-Emulsion, die nicht wasserlöslich ist. Das Bindemittel muss mit einem Emulgator versetzt sein, damit ein wässriges Korrosionsschutzmittel herstellbar ist. Das Korrosionsschutzmittel setzt auch in wässriger Lösung bis zu 200 g/L flüchtige Bestandteile frei. Es handelt sich damit nicht um eine rein wässrige Rezeptur. Das Freisetzen flüchtiger Bestandteile ist nicht in ausreichendem Maße unterbunden.
US 4,218,354 **(Stauffer Chemical Company)**
   Ein lösungsmittelhaltiges Korrosionsschutzmittel basierend auf vorhydrolysierten, organischen Siloxanverbindungen, versetzt mit Metallpartikeln wird vorgeschlagen. Es handelt sich um ein Korrosionsschutzmittel, das mit meist unter-stöchiometrischen Mengen Wasser zur Bildung eines Siloxan-Kondensats hergestellt, jedoch nur in sauren pH-Bereich und - gemäß Anspruch 1 - nur in der Gegenwart von organischen Lösungsmitteln löslich ist. Damit ist zwar das Freisetzen flüchtiger Bestandteile beim Kondensieren der Monomere unterbunden, jedoch bleibt die Verarbeitung des vorgeschlagenen Korrosionsschutzmittels wegen des notwendigen organischen Lösungsmittels problematisch und genügt heutigen Anforderungen nicht mehr.
WO 94/09075 **(Wacker Chemie)**
   Ein wässriges Korrosionsschutzmittel wird in der WO 94/09075 vorgeschlagen. Vorhydrolysierte Silane, die jedoch wiederum nicht wasserlöslich sind, werden mit Hilfe von Emulgatoren in Wasser eingebracht. Nachteilig an diesen Korrosionsschutzmitteln ist, dass die aus ihnen aufgebauten Beschichtungen nicht besonders temperaturbeständig sind. Bei 120 °C und darüber erweicht die Beschichtung und die darin enthaltenen Emulgatoren, oft Tenside, wirken wie Weichmacher, die Wasser einlagern. Dam it ist das Einsatzgebiet dieses Korrosionsschutzmittel erheblich eingeschränkt.
DE 198 18 923 **(Degussa-Hüls AG)**
   Es werden wasserlösliche Amino- und Alkenyl-funktionelle Organosiloxane beschrieben, die nach Hydrolyse beim Abbinden keine Alkohole mehr freisetzen. Diese Organosiloxane werden zum Beschichten von Pigmenten eingesetzt. Die beschichteten Pigmente werden dann getrocknet und für verschiedene Verwendungen eingesetzt. Die Organosiloxane, die in dieser Schrift beschrieben werden, sind keine Netzwerkbildner. Sie sind hydrophil und eignen sich zwar zur Beschichtung von Pigmenten, nicht aber für Anwendungen, bei denen es auf eine gute Filmbildung oder Korrosionsschutz ankommt.

In der JP 58167445 wird ein Bindemittel offenbart, das neben anderen Siloxanen ein wässriges, filmbildendes polymeres Siloxan enthält. Hinweise auf das Verhalten des Bindemittels während eines Aushärtens finden sich jedoch nicht.

Es ist Aufgabe der Erfindung, ein in den verschiedenen Anwendungen hinsichtlich der Bedingungen für das Abbinden möglichst gut steuerbares, wässriges Bindemittel und ein auf Verwendung dieses Bindemittels basierendes Beschichtungsmittel, insbesondere Korrosionsschutzmittel vorzuschlagen, das im Wesentlichen frei von organischen Lösungsmitteln ist und frei von organischen Reaktionsprodukten abbindet.

Diese Aufgabe wird gelöst mit einem Bindemittel nach Anspruch 1. Das erfindungsgemäße Bindemittel ist wässrig, was eine umweltfreundliche Verarbeitbarkeit in einfachen Anlagen gewährleistet. Das Bindemittel ist weiter filmbildend, so dass es sich zur Verwendung für Beschichtungen eignet. Mit dem erfindungsgemäßen Bindemittel können auf einfache Weise Beschichtungen unterschiedlichster Schichtdicke erzeugt werden. Das Bindemittel lässt sich als einfache Schicht, aber auch in mehrschichtigen Schichtaufbauten einsetzen, wie nachstehend näher erläutert wird. Das polymere Siloxan gewährleistet stabile Beschichtungen, eine einfache Verarbeitbarkeit und die Verträglichkeit mit Additiven, die einem Bindemittel zur Herstellung von Beschichtungsmitteln zugesetzt werden.

Das erfindungsgemäß als Bindemittel eingesetzte polymere Siloxan weist nur einen geringen Gehalt an Alkoxygruppen auf. Es ist vorzugsweise frei von Alkoxygruppen, das heißt, der Gehalt an Alkoxygruppen liegt erfindungsgemäß bei weniger als 10 Gewichts-%, bevorzugt bei weniger als 5 Gewichts-%, besonders bevorzugt bei weniger als 2 Gewichts-%, jeweils bezogen auf das polymere Siloxan.

Erfindungsgemäß werden zur Herstellung des polymeren Siloxans Silane eingesetzt, die Epoxy-, Merkaptan- oder Hydroxyalkylgruppen aufweisen, wobei Merkaptangruppenhaltige Silane aufgrund der Geruchsprobleme einen begrenzten Anwendungsbereich haben. Aber auch Alkyl-, insbesondere Alkenylsilane können eingesetzt werden. Methacrylsilane sind ebenfalls geeignet, insbesondere, wenn das Bindemittel unter Einsatz von UV-Licht ausgehärtet wird.

Das erfindungsgemäße Bindemittel kann als Homo- oder Heteropolymer aufgebaut sein. Anders als aus dem Stand der Technik bekannt, werden nach Möglichkeit keine Monomere als Bindemittel eingesetzt. Das Bindemittel besteht vielmehr überwiegend aus bereits kondensierten Molekülen. Der Gehalt an Monomeren liegt erfindungsgemäß unter 10 Gewichts-% bezogen auf den Gesamt-Festkörper des Bindemittels, vorzugsweise unter 5 Gewichts-%, besonders bevorzugt unter 3 Gewichts-%, vorteilhaft unter 1 Gewichts-%, jeweils bezogen auf den Gesamt-Festkörper des Bindemittels.

Wesentlicher Vorteil dieser Maßnahme ist es, dass beim Aushärten des Bindemittels kaum noch Alkohole abgespalten werden. Der Anteil abgespaltener Alkohole liegt erfindungsgemäß bei weniger als 10 Gewichts-% bezogen auf die Menge des Bindemittels, vorteilhaft bei weniger als 5 Gewichts-%, besonders vorteilhaft bei weniger als 2 Gewichts-%, jeweils bezogen auf die Menge des Bindemittels. Obwohl ein bereits vorhydrolysiertes bzw. -kondensiertes Bindemittel eingesetzt wird, ist die Reaktivität des polymeren Siloxans ausreichend, um z. B. in der Verwendung als Bindemittel einen Base-coat auf dem metallischen Untergrund zu stabilisieren und zu fixieren. Das polymere Siloxan liegt erfindungsgemäß nicht mehr in monomerer Form vor, ist aber auch noch nicht bis zum Gelpunkt kondensiert. In diesem Zustand eignet es sich ausgezeichnet zur Beschichtung von Werkstücken. Dabei ist das erfindungsgemäße polymere Siloxan bevorzugt ohne Zusatz von Emulgatoren wasserlöslich.

Weiter wird bevorzugt, dass das Bindemittel keine zur Katalyse zugesetzte Säure enthält. Säuren, z. B. Salzsäure, sind üblicherweise nach dem Stand der Technik als Katalysator zur Herstellung des Bindemittels aus Monomeren erforderlich. Das Herstellen des Bindemittels ohne Zusatz von Säure wirkt sich insbesondere dann vorteilhaft aus, wenn das Bindemittel in Korrosionsschutzmitteln eingesetzt wird, da eventuell noch in der ausgehärteten Beschichtung vorhandene Säuren hydrophil wirken, was für den Korrosionsschutz ausgesprochen nachteilig ist.

Die Silane umschließen erfindungsgemäß Partikel, deren Abmessungen unter 100 µm liegen. Bevorzugt handelt es sich um Partikel mit einem Durchmesser von bis zu 50 µm, vorteilhaft von bis zu 20 µm, besonders vorteilhaft von bis zu 10 µm, vorzugsweise liegt der Durchmesser der Partikel im Nanometer-Bereich, also unter 1 µm. Wird das Bindemittel entweder unmittelbar oder als Bestandteil von Beschichtungsmitteln in sehr dünner Schichtdicke eingesetzt, so kann es sich als vorteilhaft erweisen, Partikel mit Abmessungen kleiner 1 µm, bevorzugt kleiner 55 nm, besonders bevorzugt kleiner 10 nm, vorzugsweise kleiner 5 nm einzusetzen. Partikel und monomere Silane werden gemischt. Die Silane hydrolysieren zu polymeren Siloxanen und umschließen die Partikel, so dass ein gefülltes Bindemittel entsteht, bei dem die zu polymernen Siloxanen kondensierten Silane die Partikel umgeben.

Es kann sich um Partikel handeln, die aus Silizium bestehen oder die Silizium enthalten, insbesondere werden Siliziumdioxid eingesetzt, die beispielsweise in Form von Silicasolen, Siloxanen oder Polysilikaten bereitgestellt und eingesetzt werden können. Besonders geeignet sind kolloidales Siliziumdioxid oder partikelförmige Kieselsäuren, auch als Kieselsole bezeichnet. Als Polysilikate werden z. B. als Hydrogen-, Lithium-, Kalium oder Natriumpolysilikate eingesetzt. Vor allem modifizierte Kieselsole, die im sauren pH-Wert-Bereich stabil sind, eignen sich für den Einsatz im erfindungsgemäßen Bindemittel. Die Modifizierung der Oberfläche, wird häufig durch Anlagerung von Metallen oder Metallsalzen an die Kieselsole erreicht.

Es kann sich aber auch um andere organische oder anorganische Partikel handeln. Bevorzugt werden z. B. Metallsalze, -oxide oder -alkoxide eingesetzt, insbesondere dann, wenn sie in geeigneter Größe vorkommen. Die für die erfindungsgemäße Verwendung geeignete Größe kann auch erreicht werden, indem die vorgenannten Metallsalze, - oxide oder -alkoxide mit Trägersubstraten vermischt sind. Vorteilhaft können Aluminium-, Titan-, Molybdän-, Zirkon, Yttrium-, Niobium-, Cer- oder Lanthanverbindungen oder Mischungen solcher Verbindungen, ggf. mit Trägersubstraten vermischt, eingesetzt werden. Auch übliche Korrosionsschutzpigmente können -ggf. in Mischung mit den vorgenannten Partikeln, eingesetzt werden, z. B. Phosphate, Phosphonate, Phosphide, insbesondere Eisenphosphid und /oder Molybdate. Weiter können -ggf. in Mischung mit den vorgenannten Partikeln- auch leitfähige Pigmente, insbesondere organische leitfähige Pigmente, z. B. Silizium, bevorzugt in Waferqualität, Nanotubes, Ruß, ICPs (Intrinsic Conductive Polymers) eingesetzt werden. Die Partikel können erfindungsgemäß in folgenden Mengenverhältnissen -bezogen auf das werksseitig jeweils zur Herstellung des Bindemittels eingesetzte monomere Silan- verwendet werden: Das Mol-Verhältnis Silan : Partikel kann von 50 : 1 bis 1 : 50, vorteilhaft von 20 : 1 bis 1 : 20, bevorzugt von 10 : 1 bis 1 : 10, besonders bevorzugt von 5 : 1 bis 1 : 5 eingestellt sein. Nach einer besonders geeigneten Ausführung liegt es im Bereich Silan : Partikel 2 : 1 bis 1 : 2.

Entscheidend ist für eine bevorzugte Anwendung des Bindemittels zur Verwendung von Korrosionsschutzmitteln, dass es sich um Partikel handelt, die bei einem Einsatz des Bindemittels in einem Beschichtungsmittel nach dessen Aushärten möglichst wenig hydrophil wirken. Hier haben sich vor allem die vorstehend beschriebenen Polysilikate als sehr geeignet erwiesen.

Nach der Erfindung führt das Einmischen oder Einlagern von Partikeln mit Abmessungen <100 µm in die Silane zu einem besonders dichten, gefüllten, filmbildenden Bindemittel, dass in wässriger Lösung, stabil ist. Je nach den Anforderungen verschiedener Anwendungsfälle können der wässrigen Lösung des Bindemittels auch organische Lösemittel beigemischt sein. Bei Entfernen des Lösemittels bzw. eines Lösemittelgemisches haftet das Bindemittel sowie ggf. darin enthaltene Substanzen auf der Oberfläche des zu beschichtenden Substrats. Das Aushärten des Bindemittels erfordert vor allem das vollständige Entfernen des Lösemittels, üblicherweise das Entfernen des Wassers. Chemische Reaktionen, insbesondere Kondensationsreaktionen, tragen bei dem erfindungsgemäßen Bindemittel zwar noch zum Erreichen der vollständigen Aufhärtung bei, jedoch in weitaus geringerem Maße als z. B. beim Einsatz bekannter Bindemittel, die überwiegend oder ausschließlich auf den Einsatz von Monomeren abstellen. Speziell in diesem Aspekt zeigt sich die besonder erfinderisch Qualität des Bindemittels: während nach dem Stand der Technik beim Aushärten große Mengen an Alkoholen freigesetzt werden, setzt das erfindungsgemäße Bindemittel im wesentlichen nur noch Wasser aus Kondensationsreaktionen frei. Damit wird die Freisetzung von z. T. giftigen, vor allem aber auch entzündlichen Stoffen beim Aushärten vermieden. Der Gehalt an Wasser und ggf. anderen Lösemitteln kann zwischen 10 Gewichts-% und 99,5 Gewichts-% bezogen auf die Gesamtformulierung des Bindemittels betragen. Vorteilhaft beträgt der Gehalt an Wasser und ggf. anderen Lösemitteln bis zu 90 Gewichts-%, besonders vorteilhaft bis zu 75 Gewichts-%, bevorzugt bis zu 50 Gewichts-%, besonders bevorzugt bis zum 30 Gewichts-%.

Das erfindungsgemäße Bindemittel bindet vorzugsweise erst bei Temperaturen ab, die deutlich über Raumtemperatur liegen. Gemessen werden hier Objekt-Temperaturen, dass heißt, es wird die Temperatur erfasst und angegeben, die am zu beschichtenden Objekt gemessen wird. Zum einen wird bei erhöhten Abbinde-Temperaturen das Risiko vermieden, dass bei Verwendung des erfindungsgemäßen Bindemittels in offenen Tauchbädern das Abbinden des Bindemittels bereits vor dem Auftragen auf ein Werkstück beginnt, oder dass bei Masssenkleinteilen wie Schrauben oder dgl. durch ein zu frühes Aushärten kleine, beschichtete Werkstücke aneinander kleben, so dass keine befriedigende Beschichtung ausgebildet wird. Zum anderen kann die Abfolge vom Auftragen und Abbinden des Bindemittels besser koordiniert und gesteuert werden. Bevorzugt ist es, dass das erfindungsgemäße Bindemittel bei Objekt-Temperaturen von über 40 °C abbindet, bevorzugt von über 80 °C, besonders bevorzugt von über 150 °C, vorteilhaft bis 300°C, besonders vorteilhaft bis 500 °C. Die zuletzt genannten AbbindeTemperaturen über 150 °C sind für Anwendungen von Bedeutung, bei denen ein mindestens teilweiser Abbau der organischen Komponenten des Bindemittels in Kauf genommen wird. Die vorgenannten Abbinde-Temperaturen sind anzuwenden auf einen Einsatz des Bindemittels ohne weitere Zusätze, aber auch auf Beschichtungsmittel, die unter Verwendung dieses Bindemittels hergestellt werden.

Das Bindemittel kann sehr schnell in ca. 1 Sekunde oder sehr langsam in ca. 90 Minuten aushärten. Es ist als Vorteil des Bindemittels anzusehen, dass das Aushärten innerhalb eines weiten Zeitfensters eingestellt werden kann. Das Einstellen der Zeit zum Aushärten kann auf verschiedene Weise an die jeweiligen Erfordernisse des Verarbeiters eingestellt werden, beispielsweise durch die Art, wie die zum Aushärten erforderliche Energie zugeführt wird, in einem konventionellen Konvektionsofen, mittels UV-Licht oder durch Induktion. Alternativ kann die Zeit zum Aushärten des Bindemittels durch Auswahl der zur Herstellung des Bindemittels eingesetzten Silane oder aber durch Zusatz von Additiven, typischerweise hochsiedenden Stoffen (Lösungsmitteln), beeinflusst werden. Die Zeit zum Aushärten beträgt bevorzugt zwischen 2 und 60 Minuten, bevorzugt zwischen 3 und 30 Minuten.

Nach einer vorteilhaften Ausführungsform des Bindemittels weist das wässrige polymere Siloxan ein Molekulargewicht von mindestens mind. 200 g/mol, vorteilhaft mindestens 400 g/mol, besonders vorteilhaft mindestens 800 g/mol, vorzugsweise von 1.000 g/mol auf. Ein Molekulargewicht in dieser Größenordnung gewährleistet, dass einerseits die Hydrolyse und Kondensation weit genug fortgeschritten ist, um das Ausgasen organischer Komponenten auszuschließen oder sehr weitgehend zu unterbinden. Zum anderen ist bei einem Molekulargewicht von mindestens 1.000 g/mol noch eine ausreichende Reaktivität und Wasserlöslichkeit sichergestellt, die für die Verwendungseigenschaften des Bindemittels ausschlaggebend sind.

Es wird bevorzugt, wenn das Bindemittel einen Festkörpergehalt von mindestens 0,5 Gewichts-% aufweist, vorzugsweise von mindestens 10 Gewichts-%, besonders bevorzugt von mindestens 25 Gewichts-%, vorteilhaft von mindestens 50 Gewichts-%, besonders vorteilhaft von bis zu 70 Gewichts-%, nach einer bevorzugten Ausführungsform von bis zu 90 Gewichts-%. Mit einem Festkörpergehalt von mindestens 0,5 Gewichts-% lässt sich das Bindemittel herstellen, transportieren, lagern und einsetzen sowie verarbeiten.

Das erfindungsgemäße Bindemittel weist einen pH-Wert im Bereich pH3 bis pH5 auf. In diesem Bereich ist es in wässriger Lösung stabil. Der pH-Wert richtet sich zunächst nach dem als Ausgangsprodukt verwendetem Silan bzw. der zur Herstellung der polymeren Siloxane eingesetzten Mischung von Silanen, die ggf. mit den vorbeschriebenen Partikeln, insbesondere mit Kieselsolen versetzt sind. Er kann daneben auch in Abstimmung auf die jeweilige Anwendung erfolgen.

Das Bindemittel kann nach einer vorteilhaften Weiterbildung der Erfindung als Ausgangsprodukt zur Herstellung des Bindemittels neben Silanen auch noch organische Co-Binder enthalten. Hier seien beispielsweise genannt Alkydharze, wässrige oder wasserverdünnbare Epoxidharzester, Acrylatdispersionen, Phenoxyharze, Melaminharze, Polyurethanharze oder Epoxidharze. Co-Binder können aus verschiedenen Gründen zugesetzt sein, um jeweils für den spezifischen Anwendungszweck geeignete Eigenschaften einzustellen, z. B. zur Haftungsverbesserung, zur besseren Einbindung von weiteren Substanzen, die bei der Weiterverarbeitung zu Beschichtungsmitteln zugesetzt werden, zum Einstellen von Verarbeitungsbedingungen und Härtungsbedingungen, sowie zur Steuerung der Filmbildungseigenschaften des polymerisierten Films. Die Menge des eingesetzten Co-Binders beträgt 0,01 Gewichts-% bis 50 Gewichts-% bezogen auf den jeweiligen Festkörper des Bindemittels.

Das erfindungsgemäße Bindemittel kann bezogen auf den jeweiligen Verwendungszweck angepasst werden und hierfür mit einem Festkörpergehalt von 0,5 bis 90 Gewichts-% in Lieferform bereitgestellt werden. Dieses Bindemittel kann für sich genommen ohne weitere Zusätze zur Beschichtung von Werkstücken eingesetzt werden, beispielsweise als Versiegelung für Oberflächen. Ein Einsatz als Top-Coat, also als transparente Deckschicht, ist ohne weiteres möglich. Ein anderer typischer Einsatzzweck des Bindemittels ist dessen Verwendung in Beschichtungsmitteln für Oberflächen, insbesondere für Korrosionsschutzmittel und für farblose sowie farbgebende Beschichtungsmittel. Das Bindemittel oder ein unter Verwendung des vorstehend beschriebenen Bindemittels hergestelltes Beschichtungsmittel kann zur Beschichtung vielfältiger Werkstücke eingesetzt werden. Es können sowohl große Werkstücke oder Oberflächen als auch Kleinteile, insbesondere Massenkleinteile wie Schrauben, Federn, Klammern oder Clipse beschichtet werden. Typische Einsatzbereiche sind beispielsweise das Beschichten von Werkstücken, sowohl von Gestell-Ware, also von großen Werkstücken, die einzeln beschichtet werden als auch von Massenkleinteilen. Daneben ist das Beschichten mittels Bandbeschichtungsverfahren (Coil-Coating), wobei das Beschichtungsmittel meist durch Gießen, Rakeln oder im Spritzverfahren aufgetragen wird, ein bedeutender Anwendungsbereich.

Das Bindemittel oder das damit hergestellte Beschichtungsmittel kann für die heute üblichen, ein- oder mehrschichtigen Oberflächenbeschichtungen z.B. zur Beschichtung von unbehandelten oder vorbehandelten Metallen eingesetzt werden. Vorbehandelte Metalle können mechanisch vorbehandelt sein, z. B. durch Kugelgestrahlten, es können aber auch chemisch vorbehandelte Metalloberflächen, z. B. phosphatierte Metalloberflächen beschichtet werden. Die vorbehandelten Metalloberflächen können auch mit einem Haftvermittler vorbehandelt sein. Ebenso können mit Zink oder Zinklegierungen veredelte, passivierte Metalloberflächen beschichtet werden. Eine Beschichtung auf einem solchen Untergrund wird üblicherweise als Top-coat oder Versiegelung bezeichnet.

Es wird als besonderer Vorteil angesehen, dass unter Verwendung eines einheitlichen Bindemittels eine Serie aufeinander abgestimmter Beschichtungsmittel angeboten werden kann: So kann beispielsweise ein erstes Beschichtungsmittel als so genannter Base-coat Additive enthalten, die zum Korrosionsschutz betragen. Ein zweites Beschichtungsmittel kann dann farbgebende Pigmente enthalten und ein drittes Beschichtungsmittel enthält keine weiteren Additive sondern wird nach Art eines Top-coats oder einer Oberflächenversiegelung auf das erste und das zweite Beschichtungsmittel aufgetragen. Sämtliche vorgenannten Beschichtungsmittel enthalten das erfindungsgemäße Bindemittel. Das dritte Beschichtungsmittel besteht im Wesentlichen aus dem erfindungsgemäßen Bindemittel, das allenfalls auf die Verarbeitungsbedingungen eingestellt ist.

Häufig wird auch ein Base-coat auf einen metallischen, mit Zink oder einer Zinklegierung veredelten, passivierten Untergrund aufgetragen, entweder in einer Schicht oder in mehreren Schichten. Auf den Base-coat wird dann ein Top-coat aufgetragen. Base-coat und Top-coat enthalten dasselbe Bindemittel.

Erfindungsgemäße Beschichtungsmittel können mit derselben Rezeptur in mehreren Schichten oder in verschiedene Rezepturen, aber unter Verwendung desselben Bindemittels vielfältig eingesetzt sein. Hier erweist sich als vorteilhaft, dass durch Verwendung desselben Bindemittels gleiche oder doch ähnliche Verarbeitungsbedingungen anzusetzen sind und die Schichten gut aufeinander haften.

Der Festkörper des Beschichtungsmittels beträgt mindestens 0,5 % und maximal 95 %, bevorzugt mindestens 1%, besonders bevorzugt mindestens 20 %, vorteilhaft mehr als 50%.

Die Beschichtungsmittel weisen neben dem Bindemittel ein oder mehrere Additive auf. Diese Additive können -wie nachstehend erläutert- aus einer breiten Auswahl von Substanzen gewählt werden. Es kann sich um Feststoffe, aber auch um flüssige oder pastöse Additive handeln. Es können einzelne Additive eingesetzt werden, aber auch Mischungen von Additiven. Die Mischungen können sowohl aus Additiven zur Einstellung unterschiedlicher Eigenschaften eingesetzt sein, als auch zur Einstellung gleicher Eigenschaften des Beschichtungsmittels.

In einer einfachen Ausführungsform sind dem Beschichtungsmittel neben dem Bindemittel nur noch Additive zugesetzt, die die Verarbeitung des Bindemittels unter Praxisbedingungen und ggf. abgestimmt auf weitere Beschichtungsmittel gewährleisten. Dies können Additive zur Einstellung der Untergrundbenetzung, der Viskosität und/oder zur Einstellung der Aushärtetemperatur oder -zeit sein. Beispiele solcher Additive sind Wasser, Alkohole, Ketone, Glycole, Polyglycole, Polypropylenglycol, Glycolether, Glycoletherester, insbesondere Dipropylenglycol, Texanol, Methoxypropanol, Butylglcol und aromatische oder aliphatische Kohlenwasserstoffe. Diese Additive werden dem Beschichtungsmittel in Mengen von 0,01 Gewichts-% bis 25 Gewichts-%, vorzugsweise 0,1 Gewichts-% bis 15 Gewichts-%, jeweils bezogen auf die Gesamtformulierung des Beschichtungsmittels zugesetzt.

Dem erfindungsgemäßen Beschichtungsmittel können als Additive auch feste oder flüssige Wachse als Emulsion oder Dispersion zugesetzt sein, um beispielsweise die Gleiteigenschaften der Beschichtung einzustellen. Es können übliche und bekannte Wachse eingesetzt sein, z. B. Wachse auf Basis von Polyethylen oder Polypropylen, Polytetrafluorethylen, Polyvinylidenfluorid, aber auch natürliche Wachse wie Carnaubawachs oder Mischungen der vorgenannten Substanzen. Wachse können -einzeln oder in Kombination- in Mengen von 0,01 bis 40 Gewichts-% bezogen auf die Gesamtformulierung des Beschichtungsmittels in Lieferform eingesetzt werden.

Das Beschichtungsmittel kann neben dem erfindungsgemäßen Bindemittel weiterhin Additive enthalten, die die Rheologie, die Entschäumung, das Fließverhalten, die Entlüftung oder die Pigmentbenetzung beeinflussen, aber auch Mittel zur Flexibilisierung oder Katalysatoren sowie Wasserfänger können enthalten sein. Diese Additive können jeweils in Anteilen von 0,01 bis 20 Gewichts-% bezogen auf die Gesamtformulierung des Beschichtungsmittels zugesetzt sein. Vorteilhaft werden zwischen 2 Gewichts-% und 8 Gewichts-%, bevorzugt weniger als 2 Gewichts-%, besonders bevorzugt weniger als 1 Gewichts-%. Insbesondere monomere oder oligomere Silane, die als Wasserfänger agieren, sind häufig eingesetzte Additive.

Nach einer vorteilhaften Ausführungsform weist das Beschichtungsmittel neben dem Bindemittel als weiteres Additiv noch Pigmente oder Pigmentpaste auf, die eine Farbgebung ermöglichen. Dabei kann es sich um übliche organische oder anorganische Pigmente oder Pigmentpasten handeln, aber auch um Farbstoffe, d.h., um lösliche Feststoffe mit färbenden Eigenschaften. Gerade bei der Beschichtung von Metallen können aber auch Metall-Partikel wie beispielsweise Aluminiumpartikel als Pigmente eingesetzt werden, um z. B. Metallic-Effekte zu erzielen. Neben den Pigmenten, Pigmentpasten oder Farbstoffen können auch Füllstoffe als Additive zugesetzt sein, beispielsweise Calciumcarbonat oder Silikate, insbesondere Aluminium- oder Magnesiumsilikate, Bariumsulfat oder Mischungen von Füllstoffen. Die farbgebenden Pigmente, Pigmentpasten, Farbstoffe und/oder Füllstoffe sind üblicherweise in einem Anteil von 0,01 Gewichts-% bis 60 Gewichts-% bezogen auf die Gesamtformulierung des Beschichtungsmittels zugesetzt.

Besonders bevorzugt ist der Einsatz des Bindemittels in einem Beschichtungsmittel, das als Korrosionsschutzmittel eingesetzt wird. Das Beschichtungsmittel weist dann das erfindungsgemäße Bindemittel sowie feste und/oder flüssige Additive auf, die die Korrosionsbeständigkeit des vorbehandelten Metalls verbessern. Im Rahmen der Erfindung werden beispielsweise mit gutem Effekt in Wasser lösliche, dispergierbare oder mischbare Korrosionsinhibitoren und/oder die Korrosion verhindernde oder verzögernde Pigmente zugesetzt, vorzugsweise stickstoffhaltige Verbindungen, insbesondere organische Nitroverbindungen. Besonders bevorzugt wird Dinitrosalicylsäure. Ein weiter bevorzugter Zusatz zu dem Beschichtungsmittel sind Borverbindungen, insbesondere aus der Gruppe der Borsäuren oder Boroxide, aber auch Molybdänverbindungen, insbesondere Molybdate oder Verbindungen, die Phosphor enthalten. Diese Korrosionsinhibitoren werden in Mengen von 0,01 Gewichts-% bis 30 Gewichts-% bezogen auf die Gesamtformulierung zugesetzt, wobei die Untergrenze durch das Erreichen einer gewünschten Wirkung gegeben ist, während die Obergrenze aus Kostengründen gesetzt ist.

Hochwirksamer Korrosionsschutz wird erreicht, wenn einem Beschichtungsmittel enthaltend das erfindungsgemäße Bindemittel weitere Additive zugesetzt werden, die einen kathodischen Korrosionsschutz gewährleisten. Eine Vielzahl von Metallen, Metallverbindungen und/oder Metalllegierungen eignen sich zum Veredeln bzw. Beschichten von Metall-Oberflächen, um Korrosion zu verhindern. Sie werden als partikuläre Metalle eingesetzt. Im Rahmen der Erfindung werden insbesondere Zink, Aluminium, Eisen, Mangan und Zinn als partikuläre Metalle, Zinkaluminium-Partikel, Zink-Mangan-Partikel, Zink-Nickel-Partikel oder Chrom-Nickelstahl-Partikel als partikuläre Metalllegierung in Verbindung mit dem erfindungsgemäßen Bindemittel als Korrosionsschutzmittel zum Beschichten von Metall-Oberflächen eingesetzt, wobei insbesondere Zink und Zinkverbindungen wie eine Zinkaluminiumverbindung einen hochwirksamen kathodischen Korrosionsschutz gewährleisten. Insbesondere in Form so genannter Flakes sind diese partikulären Metalle ein wirksamer Korrosionsschutz. Flakes sind nicht sphärische sondern plättchenförmige Partikel, die eine gute Schichtbildung unterstützen. Die vorgenannten Metalle und Metallverbindungen eigenen sich besonders gut, um Metall-Oberflächen gegen Korrosion zu schützen. Die Metalle, Metallverbindungen und Metalllegierungen können sowohl in reiner Form als auch in Mischungen aus zwei oder mehr Substanzen in dem erfindungsgemäßen Mittel zum Beschichten eingesetzt werden. Nach einer bevorzugten Ausführungsform der Erfindung werden dem Mittel zum Beschichten leitfähige Additive, vorzugsweise organische oder anorganische leitfähige Stoffe, darunter Silizium, Eisenphosphid, Ruß, Nanotubes oder ICP's zugesetzt.

Nach einer weiteren vorteilhaften Ausbildung der Erfindung wird das partikuläre Metall in Form von Staub, Kugeln, sphärischen Teilchen, Lamellen und/oder Flakes eingesetzt. Die sich beim Auftragen dieser Partikel ergebende Schichtung der Metallpartikel bewirkt eine besonders gute Abschirmung der Metall-Oberfläche gegen korrosive Einflüsse. Durch Mischung der Metallpartikel kann das Korrosionsschutzmittel besonders gut auf den jeweiligen Anwendungsfall abgestimmt werden.

Um den kathodischen Korrosionsschutz weiter zu optimieren, hat sich ein Anteil des partikuläre Metalls von ca. 10 Gewichts-% bis ca. 95 Gewichts-%, bevorzugt von ca. 20 Gewichts-% bis ca. 80 Gewichts-%, besonders bevorzugt von ca. 20% Gewichts-% bis ca. 60 Gewichts-% bezogen auf die Gesamtformulierung des Beschichtungsmittels als geeignet herausgestellt. Beim Einsatz von Zinkstaub für ein Beschichtungsmittel haben sich z. B. vorteilhaft 10 Gewichts-% bis 95 Gewichts-%, besonders vorteilhaft 60 Gewichts-% bis 80 Gewichts-% Zink in Form von Zinlcstaub bezogen auf die Gesamtformulierung des Beschichtungsmittels als geeignet erwiesen. Wird partikuläres Metall in Form von Flakes, z.B. als Zink-, Zinkaluminium- oder Aluminiumflakes eingesetzt, so beträgt der Anteil partikuläre Metalls an der Gesamtformulierung des Beschichtungsmittels vorteilhaft 20 Gewichts-% bis 50 Gewichts-%.

Das erfindungsgemäße Beschichtungsmittel zum Beschichten von Metall-Oberflächen kann sowohl als Ein-Komponenten-System als auch als Zwei-Komponenten-System oder Mehr-Komponenten-System ausgelegt sein. Insbesondere im Falle der Anwendung als Korrosionsschutzmittel kann es sich als zweckmäßig erweisen, eine Komponente I und eine Komponente II zunächst separat zu lagern und erst bei Anwendung zusammenzuführen. Sollte eine Mischung verschiedener Komponenten, die nach der Rezeptur des Beschichtungsmittel erforderlich sind, nicht lagerstabil sein, so ist es üblich, diese Komponenten getrennt herzustellen, zu lagern und zu liefern und erst für den Gebrauch zu mischen.

Beispielsweise kann ein Korrosionsschutzmittel eine Komponente I mit mindestens einem partikulären Metall sowie ggf. einem Wasserfänger aufweisen. Die korrespondierende Komponente II weist ein wässriges, emulgatorfreies polymeres Siloxan nach Anspruch 1 als Bindemittel auf. Falls erforderlich, ist der Komponente II ein anorganischer oder organischer Inhibitor zugesetzt. Die Komponenten I und II werden nach einer bevorzugten Ausführung bis zur Verwendung des Mittels z. B. in einem Tauchbad getrennt voneinander gelagert. Dies verlängert die Haltbarkeit des Mittels bis zur Verwendung, z. B. in einem Tauchbad. Nach einer bevorzugten Ausführungsform ist das partikuläre Metall mit organischem Lösungsmittel versetzt, insbesondere dann, wenn das partikuläre Metall aufgrund seiner großen Oberfläche zu Zersetzungsreaktionen neigt, die durch das organische Lösungsmittel unterdrückt werden.

Das polymere Siloxan wird üblicherweise in wässriger Lösung eingesetzt. Rein wässrige Lösungen lassen sich jedoch nicht in jedem Fall einsetzen, obwohl sie bevorzugt werden. Je nach Zusammensetzung der Komponenten I und II sind Mischungen mit organischen Lösungsmitteln erforderlich. Bevorzugte organische Lösungsmittel, die allein oder in Mischung miteinander oder mit Wasser eingesetzt werden, sind Alkohole, aromatische und/oder aliphatische Kohlenwasserstoffe, Ketone, Glycole, Polyglycol, Polypropylenglycol, Glycolester, Glycolether und Glycoletherester, insbesondere Dipropylenglycol, Texanol, Methoxypropanol und Butylglylcol, jeweils als alleiniges Lösungsmittel oder als Mischungen der vorgenannten Lösungsmittel. Die vorgenanngen Lösungsmittel werden in einer Menge von 0,01 Gewichts-% bis 35 Gewichts-%, jeweils bezogen auf die Gesamtformulierung des Beschichtungsmittels zugesetzt.

Details der Erfindung werden in nachstehenden Ausführungsbeispielen erläutert:

### BINDEMITTEL:

### Binder 1

Nachfolgend wird die Synthese eines Binders für ein Mol-Verhältnis Silan: Partikel 1:2 erläutert:
50 g Dynasilan® GLYMO von Degussa (0,21 mol) werden mit 127,3 g Silikatpartikeln, hier: Levasil ® 200E von HC Starck (0,42 mol) versetzt und 1 Stunde bei Raumtemperatur gerührt. Nach 1 Stunde werden unter Vakuum solange Methanol und Wässer abrotiert bis ein Festkörpergehalt von 50% erreicht ist. Der pH-Wert des SiO₂-gefüllten polymeren Bindemittels beträgt ca. 3,0.

### Binder 2

Binder 2 ist hergestellt aus Dynasilan ® GLYEO von Degussa und Levasil® 200 E von HC Starck im Molverhältnis 1 : 6 (Silan : Si02):
50 g (0,18 mol) Dynasilan® GLYEO der Fa. Degussa werden unter Rühren mit 324,1 g (1,08 mol) Levasil ® 200 E der Fa. HC Starck versetzt und 24 h bei Raumtemperatur nachgerührt. Nach 24 h werden Ethanol und Wasser solange unter Vakuum abrotiert, bis ein Festkörpergehalt von 50 % erreicht ist.

Der pH Wert des partikelgefüllten, polymeren Siloxans beträgt ca. 3

### Binder 3

Binder 3 ist hergestellt aus Dynasilan ® GLYEO und Ludox® SK der Fa. Grace Davidson im Molverhältnis 1 : 6 (Silan : SiO₂):
50 g (0,18 mol) Dynasilan ® GLYEO werden mit 259,3 g (1,08 mol) Ludox ®SK unter Rühren versetzt und 24 h bei Raumtemperatur nachgerührt. Nach 24 h werden Ethanol und Wasser solange unter Vakuum abrotiert, bis ein Festkörpergehalt von 50 % erreicht ist. Der pH Wert beträgt ca. 4,5.

### Binder 4

Binder 4 ist hergestellt aus Dynasilan ® GLYEO und Snowtex ® ST-O-40 der Firma Nissan Chemicals im Molverhältnis 1 : 10 (Silan: SiO₂):
50 g (0,18 mol) Dynasilan ® GLYEO werden mit 270,1 g (1,8 mol) S nowtex ® ST-O-40 werden unter Rühren versetzt und 24 h bei Raumtemperatur nachgerührt. Nach 24 h werden Ethanol und Wasser solange unter Vakuum abrotiert, bis ein Festkörpergehalt von 50 % erreicht ist. Der pH Wert beträgt ca. 5.

### Binder 5

Binder 5 ist hergestellt aus Dynasilan® GLYEO und Snowtex ® ST-O-40 im Mol-verhältnis 1 : 6 (Silan: SiO₂) bei erhöhter Temperatur:
50 g (0,18 mol) Dynasilan GLYEO werden unter Rühren mit 162,1 g Snowtex ST-O-40 unter Rühren versetzt und 2 Stunden bei 60 °C nachgerührt. Danach 24 h werden Ethanol und Wasser solange bei 60 °C und vermindertem Druck abrotiert, bis ein Festkörpergehalt von 50 % erreicht ist. Der pH Wert beträgt ca. 5.

Die vorstehenden Bindemittel sind sämtlich wässrige, filmbildende, polymere Siloxane. Sie können als Beschichtung auf Werkstücke, insbesondere solchen mit metallischen Oberflächen aufgetragen werden. Beim Aushärten dieser Bindemittel wird allenfalls Wasser aus Kondensationsreaktionen freigesetzt. Alkohole oder andere flüchtige Substanzen werden beim Aushärten dieser polymeren Siloxane nicht freigesetzt.

### BESCHICHTUNGSMITEL:

Die Verwendung erfindungsgemäßer Bindemittel in Beschichtungsmitteln wird nachstehend erläutert. Das Beschichtungsmittel nach diesem Ausführungsbeispiel ist aus zwei Komponenten I und II zusammengesetzt. Die Komponenten werden getrennt hergestellt und gelagert bis zur Verwendung. Die getrennte Lagerung gewährleistet eine längere Verwendungsdauer des gebrauchsfertigen Beschichtungsmittels.

30g DPG (Dipropylenglycol) werden unter dem Dissolver mit 3g eines Benetzungsmittels mit einem HLB-V (Hydro-Lipophile-Balance-Value) von ca. 12, hier: Neodol ® 91-5 der Firma Caldig Deutschland GmbH und 2,6 g eines Wasserfängers in Form eines monomeren Silans, hier: Dynasilan ® GLYMO versetzt. Nach Homogenisierung werden 88,3 g eines partikulären Metalls zugesetzt. Das partikuläre Metall wird hier als Paste eingesetzt: Zinkaluminum-Pulver mit einem Anteil von 90 ± 3 % Zink und 7 ± 3 % Aluminium bezogen auf 100 % des eingesetzten, partikulären Metalls und einer durchschnittlichen Teilchengröße von ca. 14 µm ist mit aliphatischen Kohlenwasserstoffen und Schmiermitteln zu einer Paste verarbeitet, die auf einen Festkörper von 90 ± 2 % eingestellt ist. Diese Paste wird unter moderaten Scherbedingungen eingearbeitet und 60 min dispergiert, bis eine hochviskose Paste entstanden ist (Komponente I).

Zur Herstellung der Komponente II werden unter Scherbedingungen 30 g einer 1%igen Dinitrosalicylsäurelösung (DNSS-Lösung) mit 4,5 g eines Verdickers zur Einstellung der Viskosität, hier: Aerosil ® 200 der Firma Degussa versetzt, indem das Aerosil ® 200 langsam in die DNSS-Lösung eingestreut wird. Das Gemisch wird 60 min dispergiert. Danach wird die verdickte DNSS/A200-Lösung unter Rühren mittels Dissolver zu 66 g des SiO₂-gefüllten polymeren Bindemittels, das wie vorstehend als Binder 1 angegeben hergestellt wurde, gegeben und das Gemisch 60 min homogenisiert.

Zur Herstellung eines Tauchbades wird die Komponente II unter moderaten Scherbedingungen der Komponente I langsam zugefügt. Das Gemisch aus Komponente I und II wird danach in einem Dissolver bei ca. 1-2 m/s Schergeschwindigkeit 60 min homogenisiert. Nach 60 min wird der homogenisierte Beschichtungsmittel über Nacht (16 h) unter einem Rührer nachgerührt und ist am nächsten Morgen verarbeitungsfertig.

Das Beschichtungsmittel hat eine Viskosität von 30-40 Sekunden (Ford 4 Auslaufbecher) und einen pH-Wert von ca. 5,2. Zu Beschichtungszwecken wird das Beschichtungsmittel mit deionisiertem Wasser auf eine Viskosität von 25 sec (Ford 4 Auslaufbecher) verdünnt. Das eingestellte Material kann mit den üblichen Beschichtungsmethoden auf unterschiedlichste Substrate aufgetragen werden.

Üblicherweise wird das Beschichtungsmittel per Tauch-Schleuder-Verfahren auf Massenkleinteile wie z. B. Schrauben oder Muttern aufgetragen. Es kann aber -je nach zu beschichtendem Werkstück- auch durch Gießen, Rakeln, Sprühen, Walzen oder Tauchen auf Werkstücke aufgebracht werden, z. B. auf Gestellware, also einzeln zu beschichtende, größere Teile oder auf Coils und anschließend 10 min bei 80°C vorgetrocknet. Die Beschichtung ist danach so weit ausgehärtet, dass das beschichtete Werkstück transportiert werden kann. Entweder anschließend an die erste Beschichtung oder nach Auftragen weiterer Schichten von Beschichtungsmitteln wird das vorgetrocknete Material 30 min bei 300°C polymerisiert, also abschließend ausgehärtet, so dass die Beschichtung ihre endgültigen Gebrauchseigenschaften erhält.

Dieser Beschichtungsvorgang wird beispielsweise bei der Beschichtung von Schrauben im Tauch-Schlender-Verfahren üblicherweise zweifach durchgeführt. Nach dem Auftragen der ersten Schicht wird die erste Schicht ausgehärtet und abgekühlt. Nach dem Auftragen der zweiten Schicht des Beschichtungsmittels wird die Beschichtung wie oben beschrieben vorgetrocknet und eingebrannt.

Die beschichteten Schrauben (Rohschraube M10x80 nach DIN 931) weisen nach der Beschichtung z. B. ein Schichtgewicht gemäß DIN 931 von 0,08 bis 0,120 g/Schraube, bevorzugt von 0,09 bis 0,11 g/Schraube auf und zeigen im Salzsprühtest nach DIN 50021 eine Korrosionsbeständigkeit gegen Rotrost von > 480 h, bevorzugt > 600 h. Das fertige Beschichtungsmittel zeigt unter Rühren bei 22°C/55% rel. Luftfeuchtigkeit eine Topfzeit von mindestens 7 Tagen, maximal von 14 Tagen. Während dieser Lagerung ist es erforderlich, stets zu rühren und zu kühlen sowie die Viskosität und den pH-Wert zu kontrollieren. Vor dem Beschichten muss die Viskosität durch Zugabe von deionisiertem Wasser auf 25 sec (Ford 4) eingestellt werden.

### Beschichtungsmittel Top-coat

Zur Herstellung einer transparenten Deckschicht, die als einzige Beschichtung oder als letzte Schicht einer mehrschichtigen Beschichtung auf die Oberfläche eines Werkstücks aufgetragen wird, wird unter Verwendung von 5 Gewichts-% des vorbeschriebenen Bindemittels "Binder 1" und 95 Gewichts-% Wasser, jeweils bezogen auf die Gesamtformulierung des Beschichtungsmittels ein transparentes Beschichtungsmittel hergestellt. Das Beschichtungsmittel kann mit beliebigen Auftragsverfahren aufgetragen werden: es kann beispielsweise aufgesprüht, aufgewalzt, aufgerakelt aber auch durch Tauchen aufgebracht werden. Das Aushärten dieses Top-coats erfolgt über einen Zeitraum von 20 Minuten bei 150 °C.

## Patentansprüche

1. Bindemittel, aufweisend ein wässriges, filmbildendes, polymeres Siloxan, **dadurch gekennzeichnet, dass** das Bindemittel
- bezogen auf die Gesamtmenge des Bindemittels einen Alkoxygruppengehalt von weniger als 10 Gewichts-% aufweist,
- dass das Bindemittel weniger als 10 Gewichts-% Monomere aufweist,
- bezogen auf die Gesamtmenge des Bindemittels, beim Aushärten weniger als 10 Gewichts-% Alkohole freisetzt,
- dass das Bindemittel aus Silanen der nachfolgenden Gruppe hergestellt ist, die Alkyl- oder Alkenylsilane, Methacrylsilane und Silane aufweist, die Epoxy-, Merkaptan-, oder Hydroxyalkylgruppen enthalten,
- dass das Bindemittel mit Partikeln gefüllt ist, die vollständig von Silan umschlossen sind, wobei die Partikel eine Abmessung von unter 100 µm aufweisen und
- dass das Bindemittel einen pH-Wert von pH3 bis pH5 aufweist.

2. Bindemittel nach Anspruch 1, **dadurch gekennzeichnet, dass** das polymere Siloxan einen Gehalt von Alkoxygruppen von weniger als 5 Gewichts-%, bevorzugt von weniger als 2 Gewichts-%, bezogen auf das polymere Siloxan, aufweist.

3. Bindemittel nach mindestens einem der vorangehenden Ansprüche, **dadurch gekennzeichnet, dass** der Anteil von Monomeren im Bindemittel weniger als 5 Gewichts-%, bevorzugt weniger als 3 Gewichts-%, vorteilhaft weniger als 1 Gewichts-%, jeweils bezogen auf den Gesamt-Festkörper des Bindemittels, beträgt.

4. Bindemittel nach mindestens einem der vorangehenden Ansprüche, **dadurch gekennzeichnet, dass** das Bindemittel beim Aushärten weniger als 5 Gewichts%, bevorzugt weniger als 2 Gewichts-% Alkohole, jeweils bezogen auf die Gesamtmenge des Bindemittels freisetzt.

5. Bindemittel nach mindestens einem der vorangehenden Ansprüche, **dadurch gekennzeichnet, dass** das Bindemittel säurefrei ist.

6. Bindemittel nach mindestens einem der vorangehenden Ansprüche, **dadurch gekennzeichnet, dass** die Partikel Abmessungen von bis zu 50 µm, besonders bevorzugt von bis zu 20 µm, vorteilhaft von bis zu 10 µm, besonders vorteilhaft von unter 1 µm aufweisen.

7. Bindemittel nach Anspruch 6, **dadurch gekennzeichnet, dass** die Partikel Abmessungen von unter 1 µm, besonders vorteilhaft zwischen 5 nm und 100 nm, bevorzugt zwischen 10 und 55 nm aufweisen.

8. Bindemittel nach mindestens einem der vorangehenden Ansprüche, **dadurch gekennzeichnet, dass** in dem Bindemittel anorganische Partikel, insbesondere Siliziumdioxid eingesetzt sind.

9. Bindemittel nach Anspruch 8, **dadurch gekennzeichnet, dass** kollidales Siliziumdioxid oder partikelförmige Kieselsäure eingesetzt sind.

10. Bindemittel nach Anspruch 8, **dadurch gekennzeichnet, dass** das Silizumdioxid dem Bindemittel in Form von Hydrogen-, Lithium-, Kalium oder Natriumpolysilikat oder als Mischung der vorgenannten Polysilikate zugesetzt ist.

11. Bindemittel nach mindestens einem der vorangehenden Ansprüche, **dadurch gekennzeichnet, dass** in dem Bindemittel organische Partikel eingesetzt sind.

12. Bindemittel nach mindestens einem der vorangehenden Ansprüche, **dadurch gekennzeichnet, dass**
- als Partikel Metallsalze, -oxide oder -alkoxide eingesetzt werden.

13. Bindemittel nach mindestens einem der vorangehenden Ansprüche, **dadurch gekennzeichnet, dass**
- als Partikel Aluminium-, Titan-, Molybdän-, Zirkon-, Yttrium-, Niobium-, Cer- oder Lanthanverbindungen oder Mischungen solcher Verbindungen eingesetzt werden.

14. Bindemittel nach mindestens einem der vorangehenden Ansprüche, **dadurch gekennzeichnet, dass**
- leitfähige Partikel eingesetzt werden.

15. Bindemittel nach mindestens einem der vorangehenden Ansprüche, **dadurch gekennzeichnet**, das das zur Herstellung des Bindemittels eingesetzte monomere Silan und die Partikel in einem Mol-Verhältnis von 50 zu 1 bis 1 zu 50, bevorzugt von 20 zu 1 bis 1 zu 20, vorteilhaft von 10 zu 1 bis 1 zu 10, besonders vorteilhaft von 5 zu 1 bis 1 zu 5, besonders bevorzugt von 2 zu 1 bis 1 zu 2 eingesetzt sind.

16. Bindemittel nach mindestens einem der vorangehenden Ansprüche, **dadurch gekennzeichnet, dass** die Objekt-Temperatur zum Aushärten des Bindemittels über Raumtemperatur, bevorzugt über 40 °C, besonders bevorzugt über 80 °C, vorteilhaft über 150 °C, sehr vorteilhaft bis zu 300 °C, besonders vorteilhaft bis zu 500 °C beträgt.

17. Bindemittel nach mindestens einem der vorangehenden Ansprüche, **dadurch gekennzeichnet, dass** die Zeit zum Aushärten des Bindemittels zwischen 1 Sekunde und 90 Minuten beträgt, vorteilhaft zwischen 2 Minuten und 60 Minuten, besonders bevorzugt zwischen 3 Minuten und 30 Minuten.

18. Bindemittel nach Anspruch 1, **dadurch gekennzeichnet, dass** das polymeren Siloxan ein Molekulargewicht von mindestens 200 g/mol, bevorzugt mindestens 400 g/mol, besonders bevorzugt mindestens 800 g/mol, vorteilhaft mindestens 1000 g/mol aufweist.

19. Bindemittel nach mindestens einem der vorangehenden Ansprüche, **dadurch gekennzeichnet, dass** der Festkörpergehalt zwischen 0,5 % und 90 %, vorteilhaft mehr als 10%, mehr als 25%, besonders bevorzugt mehr als 50%, vorteilhaft mehr als 70% beträgt.

20. Bindemittel nach mindestens einem der vorangehenden Ansprüche, **dadurch gekennzeichnet, dass** Co-Binder in einer Menge von 0,01 Gewichts-% bis 50 Gewichts-% bezogen auf die Gesamtformulierung des Beschichtungsmittels, zugesetzt sind, vorzugsweise aus der Gruppe, die umfasst Alkydharze, Epoxidharzester, Acryldispersionen, Phenoxyharze, Melaminharze, Polyurethanharze und Epoxidharze.

21. Bindemittel nach Anspruch 1, **dadurch gekennzeichnet, dass** dem wässrigen polymeren Siloxan ein organisches Lösungsmittel in einem Anteil von bis zu 20 Gewichts-%, bevorzugt von bis zu 10 Gewichts-%, jeweils bezogen auf die Gesamtformulierung des Bindemittels zugesetzt ist.

22. Beschichtungsmittel zum Beschichten von Metall-Oberflächen mit einem Bindemittel nach mindestens einem der Ansprüche 1 bis 21 und mindestens einem weiteren Additiv.

23. Beschichtungsmittel nach Anspruch 22, **dadurch gekennzeichnet, dass** das Beschichtungsmittel einen Festkörper-Gehalt von 0,5 % bis 95 % aufweist, vorzugsweise von mehr als 1%, bevorzugt von mehr als 20%, vorteilhaft von mehr als 50%.

24. Beschichtungsmittel nach mindestens einem der vorangehenden Ansprüche 22 oder 23, **dadurch gekennzeichnet, dass** die Objekt-Temperatur zum Aushärten des Bindemittels über Raumtemperatur, bevorzugt über 40 °C, besonders bevorzugt über 80 °C, vorteilhaft über 150 °C, sehr vorteilhaft bis zu 300 °C, besonders vorteilhaft bis zu 500 °C beträgt.

25. Beschichtungsmittel nach mindestens einem der vorangehenden Ansprüche 22 bis 24, **dadurch gekennzeichnet, dass** die Zeit zum Aushärten des Bindemittels zwischen 1 Sekunde und 90 Minuten beträgt, vorteilhaft zwischen 2 Minuten und 60 Minuten, besonders bevorzugt zwischen 3 Minuten und 30 Minuten.

26. Beschichtungsmittel nach Anspruch 22, **dadurch gekennzeichnet, dass** dem Beschichtungsmittel neben dem Bindemittel mindestens ein Additiv zum Einstellen der Aushärtezeit, der Untergrundbenetzung und/oder zum Einstellen der Aushärtetemperatur und/oder zur Einstellung der Viskosität der zu beschichtenden Metalloberfläche in einer Menge von jeweils 0,01 Gewichts-% bis 25 Gewichts-%, vorzugsweise von 0,1 Gewichts-% bis 10 Gewichts-%, bezogen auf die Gesamtformulierung des Beschichtungsmittels zugesetzt ist.

27. Beschichtungsmittel nach Anspruch 22, dadurch gekenntzeichnet, dass als Additiv eine oder mehrere Substanzen aus der Gruppe eingesetzt sind, die aufweist Wasser, Alkohole, Ketone, Glycole, Polyglycol, Polypropylenglycol, Glycolether, Glycoletherester, Dipropylenglycol, Methoxypropanol, Butylglycol, Texanol, aromatische und aliphatische Kohlenstoffe, und dass dieses oder diese Additive eingesetzt sind in einer Menge von 0,01 Gewichts-% bis 25 Gewichts-%, vorzugsweise von 0,1 Gewichts-% bis 15 Gewichts-%, jeweils bezogen auf die Gesamtformulierung des Beschichtungsmittels.

28. Beschichtungsmittel nach mindestens einem der Ansprüche 22 bis 27, **dadurch gekennzeichnet, dass** als Additiv Wachse und / oder Gleitmittel in einer Menge von 0,01% bis 40% bezogen auf die Gesamtformulierung des Beschichtungsmittels zugesetzt sind.

29. Beschichtungsmittel nach Anspruch 28, **dadurch gekennzeichnet, dass** als Wachse vorzugsweise feste oder flüssige Emulsionen oder Dispersionen, insbesondere Polyethylen, Polypropylen, Polytetrafluoroethylen, Polyvinylidenfluorid oder Carnaubawachs oder Mischungen verschiedener Wachse eingesetzt sind.

30. Beschichtungsmittel nach mindestens einem der Ansprüche 22 bis 29, **dadurch gekennzeichnet, dass** als Additiv Katalysatoren oder mindestens ein Additiv zur Verbesserung der Rheologie, der Untergrundbenetzung, der Entschäumung, des Fliessverhaltens, der Entlüftung, der Pigmentbenetzung, zur Flexibilisierung oder als Wasserfänger, einzeln oder in Mischung, in einer Menge von jeweils 0,01 Gewichts-% bis 20 Gewichts-%, bevorzugt 2 Gewichts-% bis 8 Gewichts-%, besonders bevorzugt unter 2 Gewichts-%, vorteilhaft unter 1 Gewichts-%, jeweils bezogen auf die Gesamtformulierung des Beschichtungsmittels, zugesetzt sind.

31. Beschichtungsmittel nach Anspruch 30, **dadurch gekennzeichnet, dass** als Additiv zum Wasserfangen ein monomeres oder ein oligomeres Silan oder eine Mischung von monomeren und/oder oligomeres Silan in einer Menge bis zu 2,8 Gewichts-%, vorzugsweise bis zu 2 Gewichts-%, besonders bevorzugt bis zu 1 Gewichts-% bezogen auf die Gesamtformulierung des Beschichtungsmittels zugesetzt ist.

32. Beschichtungsmittel nach mindestens einem der Ansprüche 22 bis 31, **dadurch gekennzeichnet, dass** als Additiv Pigmente, Pigmentpaste, Farbstoffe und / oder Füllstoffe in einer Menge von 0,01% bis 60% bezogen auf die Gesamtformulierung des Beschichtungsmittels eingesetzt sind.

33. Beschichtungsmittel nach Anspruch 32, **dadurch gekennzeichnet, dass** Metallpartikel, insbesondere Aluminiumpartikel, als Pigment eingesetzt sind.

34. Beschichtungsmittel nach mindestens einem der Ansprüche 22 bis 33, **dadurch gekennzeichnet, dass** dem Bindemittel als Additiv ein Korrosionsinhibitor und / oder ein die Korrosion verhinderndes oder verzögerndes Pigment oder eine Mischung dieser Additive in fester oder flüssiger Form, insbesondere ein organischer Korrosionshinhibitor, vorzugsweise eine organische Nitroverbindung, insbesondere eine Dinitrosalicylsäure in einer Menge von 0,01 Gewichts-% bis 30 Gewichts-%, bezogen auf die Gesamtformulierung des Beschichtungsmittels zugesetzt ist.

35. Beschichtungsmittel nach mindestens einem der Ansprüche 22 bis 34, **dadurch gekennzeichnet, dass** dem Bindemittel als Additiv Borverbindungen, insbesondere aus der Gruppe der Borsäuren oder Boroxide oder Molybdän- oder Phosphorverbindungen, jeweils einzeln oder in Mischung zugesetzt sind.

36. Beschichtungsmittel nach mindestens einem der Ansprüche 22 bis 35, **dadurch gekennzeichnet, dass** als Additiv mindestens ein partikuläres Metall zur Verbesserung der Korrosionseigenschaften der zu beschichtenden Metalloberfläche in einer Menge von von 10 Gew.-% bis 95 Gewichts-%, vorzugsweise 20 Gew.-% bis 80 Gew.-%, bevorzugt 20 Gewichts-% bis 60 Gewichts-%, vorteilhaft 20 Gewichts-% bis 50 Gewichts-%, bezogen auf die Gesamt-Formulierung des Beschichtungsmittels, zugesetzt ist.

37. Beschichtungsmittel nach Anspruch 36, **dadurch gekennzeichnet, dass** als partikuläres Metall aus der Gruppe enthaltend Zink, Aluminium, Eisen, Mangan und Zinn die partikulären Metalle jeweils einzeln, in einer Mischung oder als Legierung aus mindestens zwei Metallen aus der Gruppe von Zink und Aluminium, Eisen Mangan und Zinn oder Chrom-Nickelstahl-Partikel eingesetzt sind.

38. Beschichtungsmittel nach Anspruch 36, **dadurch gekennzeichnet, dass** das partikuläre Metall in Form von Kugeln, sphärischen Teilchen, Lamellen oder Flakes eingesetzt ist.

39. Beschichtungsmittel nach Anspruch 36, **dadurch gekennzeichnet, dass** dem Beschichtungsmittel ein Lösungsmittel für das partikuläre Metall zugesetzt ist, insbesondere ein organisches Lösungsmittel, bevorzugt Ketone, Methoxypropanol, Butylglykol, Glycole, Polyglycol, Polypropylenglycol, Glycolether, Glycolester, Glycoletherester, Dipropylenglycol, Texanol, aliphatischen und aromatischen Kohlenwasserstoffen sowie Alkoholen oder eine Mischung der vorgenannten organischen Lösungsmittel in einer Menge von 0,01 bis 35 Gewichts-% bezogen auf die Gesamtformulierung des Beschichtungsmittels zugesetzt ist.

40. Beschichtungsmittel zum Beschichten von Metall-Oberflächen mit einer Komponente I, aufweisend
- mindestens ein partikuläres Metall
- ein organisches Lösungsmittel für das partikuläre Metall
- ggf. einen Korrosionsinhibitor für das partikulären Metall und einer Komponente II, aufweisend
- ein wässriges, filmbildendes, polymeres Siloxan nach mindestens einem der Ansprüche 1 bis 21 als Bindemittel.

41. Beschichtungsmittel nach Anspruch 40, **dadurch gekennzeichnet, dass** der Komponente I und / oder der Komponente II weitere Additive zugesetzt sind.

42. Beschichtungsmittel nach mindestens einem der Ansprüche 40 oder 41, **dadurch gekennzeichnet, dass** mindestens zwei Komponenten I und II des Beschichtungsmittels bis zur Verwendung getrennt gelagert sind.

43. Werkstück mit einer Beschichtung, entstanden aus einem ausgehärteten Beschichtungsmittel nach mindestens einem der Ansprüche 22 bis 42.

## Claims

1. Binder including an aqueous, film forming, polymeric siloxane, **characterized in that** the binder
- has a content of alkoxy groups of less than 10 % by weight, based on the overall amount of the binder,
- **in that** the binder comprises less than 10 % by weight of monomers,
- liberates during curing less than 10 % by weight alcohols, based on the overall amount of the binder,
- **in that** the binder is produced of silanes of the following group, comprising alkyl- or alkenyl silanes, methacrylic silanes and silanes, which contain epoxy-, mercaptane- or hydroxyalkyl groups,
- **in that** the binder is filled with particles that are completely enveloped with silane, the particles having a dimension of less than 100 µm and
- **in that** the binder has a pH-value of pH3 to pH5.

2. Binder according to claim 1, **characterized in that** the polymeric siloxane has a content of alkoxy groups of less than 5 % by weight, preferably of less than 2 % by weight, based on the polymeric siloxane.

3. Binder according to at least one of the preceding claims, **characterized in that** the content of monomers in the binder is less than 5 % by weight, preferably less than 3 % by weight, advantageously less than 1 % by weight, each based on the overall solids-content of the binder.

4. Binder according to at least one of the preceding claims, **characterized in that** the binder liberates during curing less than 5 % by weight, preferably less than 2 % by weight alcohols, each based on the overall amount of the binder.

5. Binder according to at least one of the preceding claims, **characterized in that** the binder is acid-free.

6. Binder according to at least one of the preceding claims, **characterized in that** the particles have dimensions of up to 50 µm, particularly preferably up to 20 µm, advantageously up to 10 µm, particularly advantageously below 1 µm.

7. Binder according to claim 6, **characterized in that** the particles have dimensions below 1 µm, particularly advantageously between 5nm and 100 nm, preferably between 10 and 55 nm.

8. Binder according to at least one of the preceding claims, **characterized in that** in the binder inorganic particles, in particular silicon dioxide, are employed.

9. Binder according to claim 8, **characterized in that** colloidal silicon dioxide or particulate silicic acid are employed.

10. Binder according to claim 8, **characterized in that** the silicon dioxide has been added to the binder in the form of hydrogen-, lithium-, potassium or sodium polysilicate or as a mixture of the aforesaid polysilicates.

11. Binder according to at least one of the preceding claims, **characterized in that** in the binder organic particles are employed.

12. Binder according to at least one of the preceding claims, **characterized in that**
- as particles metal salts, - oxids or - alkoxides are used.

13. Binder according to at least one of the preceding claims, **characterized in that**
- as particles compounds of aluminum, titanium, molybdenum, zirconium, yttrium, niobium, cerium or lanthanum or mixtures of such compounds are employed.

14. Binder according to at least one of the preceding claims, **characterized in that**
- conductive particles are employed.

15. Binder according to at least one of the preceding claims, **characterized in that** the monomeric silane employed in the manufacture of the binder and the particles are employed in a molar ratio of 50 to 1 up to 1 to 50, preferably of 20 to 1 up to 1 to 20, advantageously of 10 to 1 up to 1 to 10, particularly advantageously of 5 to 1 up to 1 to 5, particularly preferred of 2 to 1 up to 1 to 2.

16. Binder according to at least one of the preceding claims, **characterized in that** the object-temperature for final curing of the binder is in excess of room temperature, preferably above 40 °C, particularly preferred above 80 °C, advantageously above 150°C, very advantageously up to 300 °C, particularly advantageously up to 500 °C.

17. Binder according to at least one of the preceding claims, **characterized in that** the time for final curing of the binder amounts to between 1 second and 90 minutes, advantageously between 2 minutes and 60 minutes, particularly preferred between 3 minutes and 30 minutes.

18. Binder according to claim 1, **characterized in that** the polymeric siloxane has a molecular weight of at least 200 g/mol, preferably at least 400 g/mol, particularly preferably at least 800 g/mol, advantageously at least 1000 g/mol.

19. Binder according to at least one of the preceding claims, **characterized in that** the solids content amounts to between 0.5 % and 90 %, advantageously more than 10 %, more than 25 %, particularly preferred more than 50 %, advantageously more than 70 %.

20. Binder according to at least one of the preceding claims, **characterized in that** co-binders in an amount of 0.01 % by weight up to 50 % by weight based on the overall formulation of the coating composition have been added, preferably from the group comprising alkyd resins, epoxy resins, acrylic dispersions, phenoxy resins, melamin resins, polyurethane resins and epoxy resins.

21. Binder according to claim 1, **characterized in that** the aqueous polymeric siloxane has added thereto an organic solvent in a proportion of up to 20 % by weight, preferably of up to 10 % by weight, each based on the overall formulation of the binder.

22. Coating composition for the coating of metal surfaces including a binder according to at least one of claims 1 to 21 and at least one further additive.

23. Coating composition according to claim 22, **characterized in that** the coating composition comprises a solids content of 0.5 % to 95 %, preferably of more than 1%, preferably of more than 20%, advantageously of more than 50%.

24. Coating composition according to at least one of the preceding claims 22 or 23, **characterized in that** the object temperature for final curing of the binder is above room temperature, preferably above 40 °C, particularly preferably above 80 °C, advantageously above 150 °C, very advantageously up to 300 °C, particularly advantageously up to 500 °C.

25. Coating composition according to at least one of the preceding claims 22 to 24, **characterized in that** the time for final curing of the binder amounts to between 1 second and 90 minutes, advantageously between 2 minutes and 60 minutes, particularly preferably between 3 minutes and 30 minutes.

26. Coating composition according to claim 22, **characterized in that** the coating composition, besides the binder, has added thereto at least one additive for adjusting the curing period, the substrate wetting and/or for adjusting the curing temperature and/or for adjusting the viscosity of the metal surface to be coated in an amount each of 0.01 weight % to 25 weight %, preferably of 0.1 weight % up to 10 weight % based on the overall formulation of the coating composition.

27. Coating composition according to claim 22, **characterized in that**, as additive, one or more substances have been employed from the group including water, alcohols, ketones, glycols, polyglycol, polypropylene glycol, glycol ethers, glycol ether esters, dipropylene glycol, methoxypropanol, butyl glycol, Texanol, aromatic and aliphatic hydrocarbons, and that this or these additives are employed in an amount of 0.01 % by weight up to 25 % by weight, preferably of 0.1 % by weight up to 15 % by weight, each based on the overall formulation of the coating composition.

28. Coating composition according to at least one of claims 22 to 27, **characterized in that**, as additive, waxes and/or lubricating agents have been added in an amount of 0.01 % to 40 % based on the overall formulation of the coating composition.

29. Coating composition according to claim 28, **characterized in that**, as waxes, preferably solid or liquid emulsions or dispersions, in particular polyethylene, polypropylene, polytetrafluoro ethylene, polyvinylidene fluoride or carnauba wax or mixtures of different waxes are employed.

30. Coating composition according to at least one of claims 22 to 29, **characterized in that** as additive catalysts or at least one additive for improving the rheology, the substrate wetting, the defoaming, the flow properties, the de-aeration, the pigment wetting, the flexibilization or as water capturing agent, have been added singly or in mixture in an amount each of 0.01 % by weight up to 20 % by weight, preferably 2 % by weight up to 8 % by weight, particularly preferably below 2 % by weight, advantageously below 1 % by weight, each based on the overall formulation of the coating composition.

31. Coating composition according to claim 30, **characterized in that**, as an additive for water capturing, a monomeric or oligomeric silane or a mixture of monomeric and/or oligomeric silane has been added in an amount of up to 2.8 % by weight, preferably up to 2 % by weight, particularly preferably up to 1 % by weight based on the overall formulation of the coating composition.

32. Coating composition according to at least one of claims 22 to 31, **characterized in that**, as additive, pigments, pigment paste, dyes and/or fillers are employed in an amount of 0.01 % by weight up to 60 % by weight based on the overall formulation of the coating composition.

33. Coating composition according to claim 32, **characterized in that** metal particles, in particular aluminum particles, are employed as pigments.

34. Coating composition according to at least one of claims 22 to 33, **characterized in that** the binder has added thereto as additive a corrosion inhibitor and/or a corrosion preventing or retarding pigment or a mixture of such additives in solid or liquid form, in particular an organic corrosion inhibitor, preferably an organic nitro compound, in particular a dinitrosalicilic acid in an amount of 0.01 % by weight up to 30 % by weight based on the overall formulation of the coating agent.

35. Coating composition according to at least one of claims 22 to 34, **characterized in that** to the binder are added as additive boron compounds, in particular from the group of boric acids or boron oxides or molybdenum or phosphorus compounds, each individually or in mixture.

36. Coating composition according to at least one of claims 22 to 35, **characterized in that**, as an additive, at least one particulate metal for the improvement of the corrosion properties of the metal surface to be coated, is added in an amount of from 10 weight % up to 95 weight %, preferably 20 weight % up to 80 weight %, preferably 20 weight % to 60 weight %, advantageously 20 weight % to 50 weight %, based on the overall formulation of the coating composition.

37. Coating composition according to claim 36, **characterized in that**, as particulate metal of the group containing zinc, aluminum, iron, manganese and tin, the particulate metals are employed each individually, in a mixture or as alloy of at least two metals of the group of zinc and aluminum, iron, manganese and tin or chromium-nickel-steel particles.

38. Coating composition according to claim 36, **characterized in that** the particulate metal is employed in the form of beads, spherical particles, lamellae or flakes.

39. Coating composition according to claim 36, **characterized in that** to the coating composition a solvent is added for the particulate metal, in particular an organic solvent, preferably ketones, methoxypropanol, butyl glycol, glycols, polyglycol, polypropylene glycol, glycol ether, glycol esters, glycol ether esters, dipropylene glycol, texanol, aliphatic and aromatic hydrocarbons, as well as alcohols or a mixture of the aforesaid organic solvents in an amount of 0.01 up to 35 weight %, based on the overall formulation of the coating composition.

40. Coating composition for the coating of metal surfaces including a component I, including
- at least one particulate metal
- an organic solvent for the particulate metal
- optionally a corrosion inhibitor for the particulate metal and one component II, including
- an aqueous, film forming, polymeric siloxane according to at least one of claims 1 to 21 as a binder.

41. Coating composition according to claim 40, **characterized in that** component I and/or component II has added thereto further additives.

42. Coating composition according to at least one of claims 40 or 41, **characterized in that** at least two components I and II of the coating composition are stored separately until used.

43. Work piece including a coating formed from a fully cured coating composition according to at least one of the claims 22 to 42.

## Revendications

1. Liant, présentant un siloxane polymère filmogène aqueux, **caractérisé en ce que** le liant
- présente une teneur en groupe alkoxy inférieure à 10 %-poids, rapportés à la quantité totale du liant,
- **en ce que** le liant présente moins de 10 %-poids de monomères,
- libère, lors du durcissement, moins de 10 %-poids d'alcools, rapportés à la quantité totale du liant,
- **en ce que** le liant est réalisé en silanes du groupe suivant qui présente des alkysilanes ou alkénylsilanes, des méthacrylsilanes et des silanes qui contiennent des groupes époxy, mercaptan ou hydroxyalkyle,
- **en ce que** le liant est rempli de particules qui sont entièrement entourées de silane, les particules présentant une dimension inférieure à 100 µm et
- **en ce que** le liant présente un pH de pH3 à pH5.

2. Liant selon la revendication 1, **caractérisé en ce que** le siloxane polymère présente une teneur en groupes alkoxy inférieure à 5 %-poids, de préférence inférieure à 2 %-poids, rapportés au siloxane polymère.

3. Liant selon au moins une des revendications précédentes, **caractérisé en ce que** la fraction de monomères dans le liant est inférieure à 5 %-poids, de préférence inférieure à 3 %-poids, de façon avantageuse inférieure à 1 %-poids, à chaque fois rapportés au corps solide total du liant.

4. Liant selon au moins une des revendications précédentes, **caractérisé en ce que**, lors du durcissement, le liant libère moins de 5 %-poids, de préférence moins de 2 %-poids d'alcools, à chaque fois rapportés à la quantité totale du liant.

5. Liant selon au moins une des revendications précédentes, **caractérisé en ce que** le liant est exempt d'acide.

6. Liant selon au moins une des revendications précédentes, **caractérisé en ce que** les particules présentent des dimensions jusqu'à 50 µm, de façon particulièrement préférée jusqu'à 20 µm, de façon avantageuse jusqu'à 10 µm, de façon particulièrement avantageuse inférieures à 1 µm.

7. Liant selon la revendication 6, **caractérisé en ce que** les particules présentent des dimensions inférieures à 1 µm, de façon particulièrement avantageuse entre 5 nm et 100 nm, de préférence entre 10 et 55 nm.

8. Liant selon au moins une des revendications précédentes, **caractérisé en ce que** des particules inorganiques, en particulier du dioxyde de silicium, sont utilisées dans le liant.

9. Liant selon la revendication 8, **caractérisé en ce que** du dioxyde de silicium colloïdal ou de l'acide silicique particulaire est utilisé.

10. Liant selon la revendication 8, **caractérisé en ce que** le dioxyde de silicium est ajouté au liant sous forme de polysilicate d'hydrogène, de lithium, de potassium ou de sodium ou en tant que mélange des polysilicates précités.

11. Liant selon au moins une des revendications précédentes, **caractérisé en ce que** des particules organiques sont utilisées dans le liant.

12. Liant selon au moins une des revendications précédentes, **caractérisé en ce que**
- des sels métalliques, oxydes métalliques ou alcoxydes métalliques sont utilisés en tant que particules.

13. Liant selon au moins une des revendications précédentes, **caractérisé en ce que**
- des composés d'aluminium, de titane, de molybdène, de zirconium, d'yttrium, de niobium, de cérium ou de lanthane ou des mélanges de tels composés sont utilisés en tant que particules.

14. Liant selon au moins une des revendications précédentes, **caractérisé en ce que**
- des particules conductrices sont utilisées.

15. Liant selon au moins une des revendications précédentes, **caractérisé en ce que** le silane monomère utilisé pour la fabrication du liant et les particules sont utilisés dans un rapport molaire de 50 à 1 jusqu'à 1 à 50, de préférence de 20 à 1 jusqu'à 1 à 20, de façon avantageuse de 10 à 1 jusqu'à 1 à 10, de façon particulièrement avantageuse de 5 à 1 jusqu'à 1 à 5, de façon particulièrement préférée de 2 à 1 jusqu'à 1 à 2.

16. Liant selon au moins une des revendications précédentes, **caractérisé en ce que** la température d'objet pour le durcissement du liant est supérieure à la température ambiante, de préférence supérieure à 40 °C, de façon particulièrement préférée supérieure à 80 °C, de façon avantageuse supérieure à 150 °C, et **en ce que** de façon très avantageuse elle atteint 300 °C, de façon particulièrement avantageuse elle atteint 500 °C.

17. Liant selon au moins une des revendications précédentes, **caractérisé en ce que** le temps de durcissement du liant est compris entre 1 seconde et 90 minutes, de façon avantageuse entre 2 minutes et 60 minutes, de façon particulièrement préférée entre 3 minutes et 30 minutes.

18. Liant selon la revendication 1, **caractérisé en ce que** le siloxane polymère présente un poids moléculaire d'au moins 200 g/mol, de préférence d'au moins 400 g/mol, de façon particulièrement préférée d'au moins 800 g/mol, de façon avantageuse d'au moins 1 000 g/mol.

19. Liant selon au moins une des revendications précédentes, **caractérisé en ce que** la teneur en corps solide est comprise entre 0,5 % et 90 %, de façon avantageuse est supérieure à 10 %, supérieure à 25 %, de façon particulièrement préférée supérieure à 50 %, de façon avantageuse supérieure 70 %.

20. Liant selon au moins une des revendications précédentes, **caractérisé en ce que** des co-liants sont ajoutés à raison d'une quantité de 0,01 %-poids à 50 %-poids, rapportés à la formulation globale de l'agent de revêtement, de préférence issus du groupe qui comprend des résines alkydes, des esters de résines époxydes, des dispersions acryliques, des résines phénoxy, des résines de mélamine, des résines de polyuréthane et des résines époxydes.

21. Liant selon la revendication 1, **caractérisé en ce qu'**un solvant organique est ajouté au siloxane polymère aqueux à raison d'une proportion jusqu'à 20 %-poids, de préférence jusqu'à 10 %-poids, à chaque fois rapportés à la formulation globale du liant.

22. Agent de revêtement pour le revêtement de surfaces métalliques avec un liant selon au moins une des revendications 1 à 21 et avec au moins un autre additif.

23. Agent de revêtement selon la revendication 22, **caractérisé en ce que** l'agent de revêtement présente une teneur en corps solide de 0,5 % à 95 %, préférablement supérieure à 1 %, de façon préférée supérieure à 20 %, de façon avantageuse supérieure à 50%.

24. Agent de revêtement selon au moins une des revendications précédentes 22 ou 23, **caractérisé en ce que** la température d'objet pour le durcissement du liant est supérieure à la température ambiante, de préférence supérieure à 40 °C, de façon particulièrement préférée supérieure à 80 °C, de façon avantageuse supérieure à 150 °C, et **en ce que** de façon très avantageuse elle atteint 300 °C, de façon particulièrement avantageuse elle atteint 500 °C.

25. Agent de revêtement selon au moins une des revendications précédentes 22 à 24, **caractérisé en ce que** le temps de durcissement du liant est compris entre 1 seconde et 90 minutes, de façon avantageuse entre 2 minutes et 60 minutes, de façon particulièrement préférée entre 3 minutes et 30 minutes.

26. Agent de revêtement selon la revendication 22, **caractérisé en ce qu'**au moins un additif destiné à régler le temps de durcissement, le mouillage du substrat et/ou destiné à régler la température de durcissement et/ou à régler la viscosité de la surface métallique à revêtir est ajouté à l'agent de revêtement outre le liant, à raison d'une quantité de respectivement 0,01 %-poids à 25 %-poids, de préférence de 0,1 %-poids à 10 %-poids, rapportés à la formulation globale de l'agent de revêtement.

27. Agent de revêtement selon la revendication 22, **caractérisé en ce que**, en tant qu'additif, il est utilisé une ou plusieurs substances issues du groupe qui présente de l'eau, des alcools, des cétones, des glycols, du polyglycol, du polypropylène glycol, de l'éther de glycol, de l'ester d'éther de glycol, du dipropylène glycol, du méthoxypropanol, du butylglycol, du texanol, des carbones aromatiques et aliphatiques, et **en ce que** cet additif ou ces additifs sont ajoutés à raison d'une quantité de 0,01 %-poids à 25 %-poids, préférablement de 0,1 %-poids à 15 %-poids, à chaque fois rapportés à la formulation globale de l'agent de revêtement.

28. Agent de revêtement selon au moins une des revendications 22 à 27, **caractérisé en ce que**, en tant qu'additif, des cires et/ou des lubrifiants sont ajoutés à raison d'une quantité de 0,01 % à 40 %, rapportés à la formulation globale de l'agent de revêtement.

29. Agent de revêtement selon la revendication 28, **caractérisé en ce que**, en tant que cires, il est utilisé préférablement des émulsions ou dispersions solides ou liquides, en particulier du polyéthylène, du polypropylène, du polytétrafluoréthylène, du fluorure de polyvinylidène ou une cire de carnauba ou des mélanges de différentes cires.

30. Agent de revêtement selon au moins une des revendications 22 à 29, **caractérisé en ce que**, en tant qu'additif, des catalyseurs ou au moins un additif pour améliorer la rhéologie, le mouillage du substrat, le démoussage, le comportement au fluage, la désaération, le mouillage des pigments, pour la flexibilisation ou en tant que capteur d'eau, sont ajoutés, isolément ou de façon mélangée, à raison d'une quantité de respectivement 0,01 %-poids à 20 %-poids, de préférence de 2 %-poids à 8 %-poids, de façon particulièrement préférée inférieure à 2 %-poids, de façon avantageuse inférieure à 1 %-poids, à chaque fois rapportés à la formulation globale de l'agent de revêtement.

31. Agent de revêtement selon la revendication 30, **caractérisé en ce que**, en tant qu'additif destiné au captage de l'eau, un silane monomère ou un silane oligomère ou un mélange de silane monomère et/ou oligomère est ajouté à raison d'une quantité jusqu'à 2,8 %-poids, préférablement jusqu'à 2 %-poids, de façon particulièrement préférée jusqu'à 1 %-poids, rapportés à la formulation globale de l'agent de revêtement.

32. Agent de revêtement selon au moins une des revendications 22 à 31, **caractérisé en ce que**, en tant qu'additif, des pigments, une pâte pigmentaire, des colorants et/ou des charges sont utilisés à raison d'une quantité de 0,01 % à 60 %, rapportés à la formulation globale de l'agent de revêtement.

33. Agent de revêtement selon la revendication 32, **caractérisé en ce que** des particules métalliques, en particulier des particules d'aluminium, sont utilisées comme pigment.

34. Agent de revêtement selon au moins une des revendications 22 à 33, **caractérisé en ce que**, en tant qu'additif, un inhibiteur de corrosion et/ou un pigment empêchant ou retardant la corrosion, ou un mélange de ces additifs sous forme solide ou liquide, en particulier un inhibiteur de corrosion organique, de préférence un composé nitro organique, en particulier un acide dinitrosalicylique, sont ajoutés au liant à raison d'une quantité de 0,01 %-poids à 30 %-poids, rapportés à la formulation globale de l'agent de revêtement.

35. Agent de revêtement selon au moins une des revendications 22 à 34, **caractérisé en ce que**, en tant qu'additif, des composés de bore, en particulier issus du groupe des acides boriques ou des oxydes boriques, ou des composés de molybdène ou de phosphore sont ajoutés au liant, respectivement isolément ou de façon mélangée.

36. Agent de revêtement selon au moins une des revendications 22 à 35, **caractérisé en ce que**, en tant qu'additif, au moins un métal particulaire est ajouté pour améliorer les caractéristiques relatives à la corrosion de la surface métallique à revêtir, à raison d'une quantité de 10 %-poids à 95 %-poids, préférablement de 20 %-poids à 80 %-poids, de préférence de 20 %-poids à 60 %-poids, de façon avantageuse de 20 %-poids à 50 %-poids, rapportés à la formulation globale de l'agent de revêtement.

37. Agent de revêtement selon la revendication 36, **caractérisé en ce que**, en tant que métal particulaire issu du groupe contenant du zinc, de l'aluminium, du fer, du manganèse et de l'étain, les métaux particulaires sont utilisés, respectivement isolément, de façon mélangée ou bien en tant qu'alliage d'au moins deux métaux issus du groupe zinc et aluminium, fer, manganèse et étain ou particules acier au chrome-nickel.

38. Agent de revêtement selon la revendication 36, **caractérisé en ce que** le métal particulaire est utilisé sous forme de billes, de particules sphériques, de lamelles ou de paillettes.

39. Agent de revêtement selon la revendication 36, **caractérisé en ce qu'**un solvant pour le métal particulaire est ajouté à l'agent de revêtement, en particulier un solvant organique, de préférence des cétones, du méthoxypropanol, du butylglycol, des glycols, du polyglycol, du polypropylène glycol, de l'éther de glycol, de l'ester de glycol, de l'ester d'éther de glycol, du dipropylène glycol, du texanol, des hydrocarbures aliphatiques et aromatiques, ainsi que des alcools ou un mélange des solvants organiques précités à raison d'une quantité de 0,01 %-poids à 35 %-poids, rapportés à la formulation globale de l'agent de revêtement.

40. Agent de revêtement pour le revêtement de surfaces métalliques avec une composante I, présentant
- au moins un métal particulaire
- un solvant organique pour le métal particulaire
- éventuellement un inhibiteur de corrosion pour le métal particulaire,
et une composante II, présentant
- un siloxane polymère filmogène aqueux selon au moins une des revendications 1 à 21 en tant que liant.

41. Agent de revêtement selon la revendication 40, **caractérisé en ce que** d'autres additifs sont ajoutés à la composante 1 et/ou à la composante II.

42. Agent de revêtement selon au moins une des revendications 40 ou 41, **caractérisé en ce qu'**au moins deux composantes 1 et II de l'agent de revêtement sont stockées séparément jusqu'à l'utilisation.

43. Pièce avec un revêtement, réalisé à partir d'un agent de revêtement durci selon au moins une des revendications 22 à 42.
